# EUROPÄISCHE PATENTSCHRIFT

(11) **EP 1 767 168 B1**
(45) Veröffentlichungstag und Bekanntmachung des Hinweises auf die Patenterteilung: **14.09.2011**
(21) Anmeldenummer: 06015086.9
(22) Anmeldetag: 19.07.2006
(51) Int. Cl.: A61C 1/00, A61G 15/02

(54) **Zahnärztiches Behandlungsgerät mit Anzeigevorrichtung**
Dental treatment tool with display means
Dispositif de traitement dentaire avec dispositf d'affichage

(30) Priorität: 20.09.2005 DE 102005044882
(43) Veröffentlichungstag der Anmeldung: 28.03.2007
(73) Patentinhaber: Ivoclar Vivadent AG, 9494 Schaan (LI)
(72) Erfinder: Rohner, Gottfried, 9450 Altstätten (CH); Grünenfelder, Robert, 9492 Eschen (LI)
(74) Vertreter: Baronetzky, Klaus

(56) Entgegenhaltungen:
- DE-A1- 19 520 765
- DE-U1-202005 005 529
- US-A- 5 295 833
- US-A- 6 089 740
- US-A- 6 117 285
- US-A- 6 118 521
- US-A1- 2005 042 572

## Beschreibung

Die Erfindung betrifft ein Dentalmaterial-Behandlungsgerät gemäß Anspruch 1.

Zu derartigen Dentalmaterial-Behandlungsgeräten gehören stationäre Geräte, wie beispielsweise Polymerisationsgeräte, die mit Licht und/oder Wärme arbeiten und dafür bestimmt sind, ein Dentalrestaurationsmaterial aus einem polymerisierbaren Kunststoff zu polymerisieren, aber auch Pressöfen oder Brennöfen. Derartige Dentalgeräte oder Dentalmaterial-Behandlungsgeräte haben häufig eine Programmsteuerung, die verschiedene Betriebszustände, wie das Vorpressen oder Nachpressen bei Brennöfen, die Aufheiz- oder aber die Nachkühlphase bei Brennöfen, oder verschiedene Phasen der Abgabe der Polymerisationsstrahlung bei Polymerisationsgeräten steuern.

In größeren Dentallabors sind regelmäßig mehrere entsprechende Dentalgeräte vorgesehen. Hierzu ist es bekannt geworden, den entsprechenden Betriebszustand mit einem akustischen oder auch einem optischen Signal zu signalisieren.

Ein Beispiel aus neuerer Zeit ist aus der EP-A2-1 133 954 zu entnehmen. Bei dieser Ausgestaltung eines programmgesteuerten Dentalgeräts wird das Ende des Brennzyklusses über eine Leuchtdiode und einen Summer signalisiert, die beide in einem Bedienfeld unten und vorne an dem dortigen Brennofen angebracht sind. Zwar ist ein akustischer Alarm vorgesehen, wenn es gilt, einen Bediener auf ein Prozessende hinzuweisen. Häufig ermöglicht ein derartiger Alarm jedoch nicht die Zuordnung zu dem je den Alarm abgebenden Gerät, und zudem ermöglicht er es nicht, den aktuellen Betriebszustand rasch zu erfassen.

Es ist ferner bereits vorgeschlagen worden, über sogenannte Fernanzeigen beispielsweise die Betriebstemperatur eines speziellen Brennofen, oder aber auch die zu erwartende Zeitdauer bis zum Ende des Brennzyklusses über Ziffern zu signalisieren. Es hat sich jedoch gezeigt, dass eine Vielzahl von derart digital dargestellten Informationen für den Bediener lediglich bei einer geringen Anzahl von Brennöfen, beispielsweise von drei Brennöfen, einigermaßen zu erfassen oder zu verarbeiten ist. Wenn eine Vielzahl von Brennöfen, beispielsweise 20 Brennöfen, oder auch andere dentale Behandlungsgeräte zusammen betrieben werden, ist es praktisch unmöglich, die digital bereitgestellten Informationen sinnvoll aus der Ferne zu erfassen, zumal bei zwei verschiedenen und zudem ähnlichen Informationen Verwechslungen leicht vorkommen können. Zudem sind derartige Digitalanzeigen vergleichsweise aufwendig zu realisieren, insbesondere, wenn sie trotz herausstehender Anordnung geschützt aufgenommen sein sollen.

Ein weiterer Nachteil von derartigen Anzeigen ist, dass ihre Sichtbarkeit stark von der Umgebungsbeleuchtung abhängt. Beispielsweise lassen sich weiße Ziffern auf schwarzem Grund bei Tageslicht vergleichsweise schlecht erkennen, während orange oder rote Ziffern bei Beleuchtung mit Glühlampen vergleichsweise schlecht zu erkennen sind. Daher haben sich derartige Fernanzeigen nicht durchgesetzt, und es ist bereits vorgeschlagen worden, auf akustische Signale zurückzugreifen, die je nach Brennofen oder sonstigen Dentalgeräten unterschiedlich sind. Andererseits können derartige Signale leicht mit einem Alarm verwechselt werden, und die Alarmfunktion ist durch eine Vielzahl von anderen, lediglich Informationszwecken dienenden akustischen Signalen eingeschränkt.

Ferner ist aus der US-A-5 072 360 ein dentales Brennofen bekannt, der unterschiedliche Betriebszustände mit einer Vielzahl von - teilweise auch unterschiedlich gefürhten-LEDs signalisiert, wobei die LEDs auf einem Bedienfeld des Brennofens angebracht sind.

Daher liegt der Erfindung die Aufgabe zugrunde, ein Dentalmaterial-Behandlungsgerät gemäß dem Oberbegriff von Anspruch 1 zu

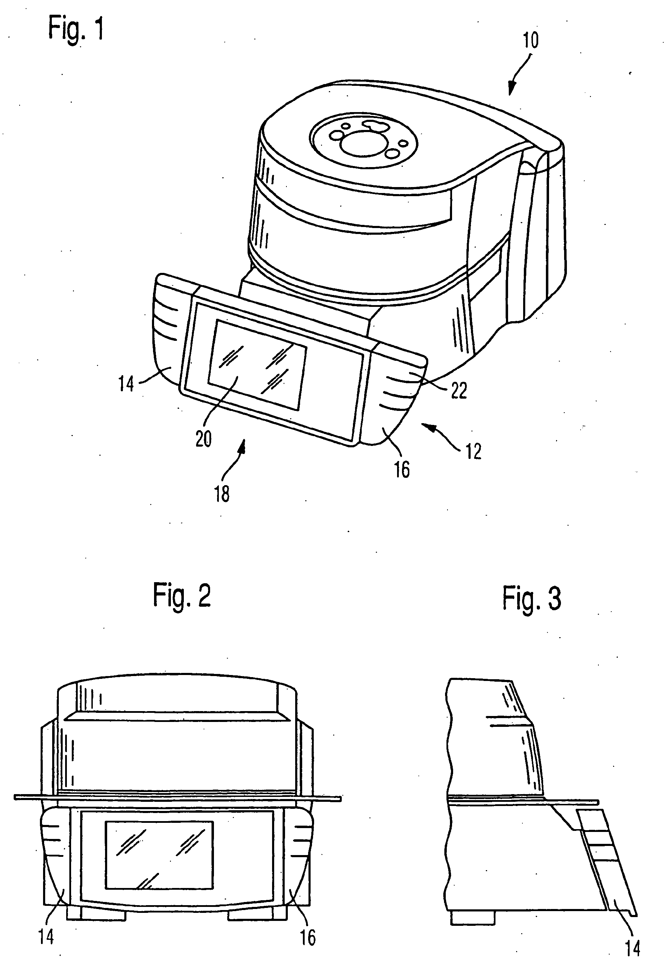

Die Druckschrift US 2005/042572 A1 offenbart ein zahnärztliches Behandlungsgerät (21) mit einem Schneidwerkzeug (17) sowie einer Anzeigevorrichtung (8) (Fig. 2). Die Anzeigevorrichtung (8) weist eine LCD-Tafel (50) auf, die folgendes enthält: einen Punktanzeigeabschnitt (52) mit zahlreichen Segmenten zum feinen Anzeigen der gemessenen Wurzelkanallänge, einen Zonenanzeigeabschnitt (54) zum schrittweisen Anzeigen der gemessenen Wurzelkanallänge in unterteilten Zonen; einen Grenzanzeigeabschnitt (56) zum Anzeigen der Zonengrenzen; einen Annährungsrate-Anzeigeabschnitt (58) zum Anzeigen der Rate der Annährung an eine Wurzelspitze (Seite 4, [0081], Fig. 3).

Die LCD-Tafel (50) weist darüber hinaus einen Punktanzeigeabschnitt (60) zum Anzeigen des gemessenen Lastdrehmoments, wobei die Segmente sequenziell nach unten zum Leuchten gebracht werden, wenn das gemessene Lastdrehmoment zunimmt (Seite 4, [0082]).

Die nächste Entgegenhaltung US 6 089 740 A offenbart ein Dentalgerät zum Bleichen von Zähnen oder zur Behandlung von Zahnrestaurationsteilen. Das Gerät weist eine Bedien- und Anzeigevorrichtung auf, wie sie in Fig. 2 dargestellt ist. Die Bedienperson kann durch Betätigung der Tasten (200A und 200B) das Programm sowie den gewünschten Leistungspegel auswählen, wobei die entsprechenden Informationen auf einem LED-Display (204) in Form von Zahlen oder Ziffern erscheinen (Spalte 7, Zeilen 2-9, Figur 2). Eine Fehlfunktion des Gerätes wird beispielsweise durch "E01" angezeigt (Spalte 13, Zeilen 39-40).

US-A-6 117 285 offenbart ein System zur Sterilisation von zahnärztlichen Geräten, wobei die Geräte in einer Sterilisationskammer (402) eingebracht werden und der Sterilisierungsprozess durch verschiedene Indikatoren, wie in Spalte 20, Zeilen 37 bis Spalte 22, Zeile 13 ausführlich offenbart, beobachtet und kontrolliert werden kann.

US-A-5 295 833 offenbart ein dentales Wurzelkanal-Diagnose und -Behandlungsgerät mit einer Anzeigevorrichtung (1), welche eine Skala (2) und mehrere entlang der Skala (2) verteilte Anzeigeelemente (Anzeigepunkte oder Anzeigefelder) (3) aufweist. Dem einen Ende der Skala ist eine Markierung (4) zugeordnet, die mit APEX (Apikalposition, Wurzelspitze) angegeben ist. Die Elemente 3a, 3b und 3c sind aus den Anzeigeelementen 3 ausgewählt, um die speziellen Bezugspositionen anzuzeigen, nämlich die Apikalposition, die Arbeitslänge und die Ausgangssignal-Änderungsposition.

DE 195 20 765 A1 offenbart eine Dental-Behandlungseinrichtung mit Wurzelkanallängen-Messfunktion, die unter anderem einen Anzeigeteil (3) aufweist. Das Anzeigefeld (3) weist, wie in Fig. 8 gezeigt, einen Zahn-Anzeigeteil (3a) in Form eines Zahnes, einen Werkzeug-Anzeigeteil (3b) mit einer Folge von Anzeigeflächen, die von oben nach unten der Reihe nach entsprechend der Einführposition des Schneidwerkzeugs (15) aufleuchten, einen Drehzahl-Anzeigeteil (3c) zur Anzeige einer der Drehzahl des Motors (17), einen Elektroden-Anzeigeteil (3e) und einen Positions-Anzeigeteil (3e).

US-A-6 118 521 offenbart ein Dentalgerät, mit welchem die optischen Charakteristiken und/oder die Farbe eines Zahns gemessen werden können. In Fig. 35 ist ein schnurloses Dentalgerät offenbart, welches ein Display (502) aufweist, aus welchem die optischen Charakteristiken des zu untersuchenden Zahnes ablesbar sind (Spalte 43, Ziele 62-67).

DE 20 2005 005529 U1 offenbart ein Steuergerät (1) zum Ansteuern eines zahnmedizinischen Instruments. Das Steuergerät (1) weist eine Anzeige zur Darstellung der jeweils eingestellten Betriebsparameter (Seite 4, [0021]) Wie aus Fig. 2 ersichtlich und in [0027] offenbart, werden die eingestellten Betriebsparameter auf einem Display (15) dargestellt, wobei das Display insgesamt drei verschiedene Anzeigen (20 bis 22) aufweist, welche zur Darstellung verschiedner Informationen genutzt werden.

Es ist zwar hier vorgesehen, dass das Display (15) eine mehrfarbige Hintergrundbeleuchtung aufweist, durch welche das gerade verwendete, voreingestellte Parameterprogramm angezeigt werden kann, jedoch wird hier der momentane Betriebszustand durch verschiedene Anzeigen von unterschiedlichen Betriebsparametern ermittelt.

schaffen, das hinsichtlich der Akzeptanz in Dentallabors oder größeren Zahnarztpraxen verbessert ist und einen trotz reduzierter Kosten günstigeren Informationsgehalt bietet.

Diese Aufgabe wird erfindungsgemäß durch Anspruch 1 gelöst. Vorteilhafte Weiterbildungen ergeben sich aus den Unteransprüchen.

Mit der erfindungsgemäßen Zuordnung von verschiedenen Betriebszuständen zu Farbsignalen, die den jeweiligen Betriebszustand signalisieren, lässt sich in überraschend einfacher Weise erreichen, dass der Bediener stets auch über eine Vielzahl von Dentalgeräten und deren Betriebszustand informiert ist. Mit einem Blick vermag er auch bei beispielsweise 20 Dentalgeräten zu erfassen, ob sein Eingreifen erforderlich ist oder ob er sich zunächst anderen Arbeiten zuwenden kann.

Erfindungsgemäß besonders günstig ist es, wenn mindestens ein Anzeigefeld vorgesehen ist, das mit mehreren Leuchtdioden bestückt ist. Beispielsweise können eine rote, eine gelbe und eine grüne oder blaue Leuchtdiode kompakt nebeneinander angeordnet sein, und das Anzeigefeld kann durch eine sogenannte Schwarzglassscheibe gebildet sein (Acrylglas mit eingelagerten sehr feinen Rußpartikeln), so dass bei allen Umgebungslichtzuständen die Sichtbarkeit gleich gut ist, aber dennoch kostengünstig eine entsprechende Anzeigevorrichtung realisierbar ist.

Eine Alarmfunktion, beispielsweise also ein Ausfall des Geräts in einem Betriebszustand, kann dann in einfacher Weise durch ein Blinken der betreffenden Leuchtdiode realisiert sein, so dass der Bediener zugleich erfassen kann, in welchem Betriebszustand der Alarm aufgetreten ist. Erfindungsgemäß ist es besonders günstig, wenn das Anzeigefeld vollflächig ausgeleuchtet wird, aber nicht zu klein ist. Beispielsweise kann es sich über eine Fläche von 2 Quadratzentimetern, aber auch zehn oder sogar 40 Quadratzentimetern erstrecken, und zwar entweder im vorderen Bereich des betreffenden Dentalgeräts oder oberhalb des Dentalgeräts, je nachdem, ob die Dentalgeräte von vorne sichtbar sind, wie es beispielsweise der Fall ist, wenn die Dentalgeräte in einer Reihe angeordnet sind, oder ob sie in Feldform angeordnet sind.

Besonders günstig ist es, dass durch die optische Anzeige von Farbsignalen über die Einstellung beliebiger Lichtparameter Zusatzinformationen übermittelt werden können, ohne dass die Hauptinformation - der Betriebszustand des Dentalgeräts - verloren ginge. Beispielsweise lässt sich mit Leuchtdioden leicht ein Modulationssignal aufmodulieren, das sich bei Annäherung an das jeweilige Ende des Betriebszustand ändert. Hier kann beispielsweise ein Blinken verwendet werden, oder aber auch ein abwechselndes Einschalten der betreffenden Leuchtdiode mit hoher Intensität und mit niedriger Intensität.

Es ist auch möglich, beim Übergang zwischen einem Betriebszustand und dem anderen Betriebszustand beide je zugehörigen Farb-Leuchtdioden je abwechselnd einzuschalten, und zwar mit zunehmender bzw. abnehmender Einschaltdauer, so dass sich ein Übergang zwischen den beiden betreffenden Betriebszuständen visuell simulieren lässt.

Anstelle der Realisierung von Leuchtdioden lassen sich auch kurzerhand verschiedenfarbige Anzeigefelder je mit beliebigen Lichtquellen beaufschlagen, so dass sie abwechselnd die entsprechende und erwünschte Signalisierungsfunktion wahrnehmen können. Auch ist es möglich, entsprechende Farbflächen durch mechanischen Bewegungen in dem Sichtbereich und außerhalb des Sichtbereich des Bedieners zu bringen, um die erwünschte Farbsignalisierung bereitzustellen.

Gemäß der erfindungsgemaßen Ausgestaltung ist es vorgesehen, dass die Anzeigevorrichtung mindestens ein Anzeigefeld aufweist, das in einer Größe von mehreren Quadratzentimetern leuchtet.

Gemäß der erfindungsgemäßen Ausgestaltung ist es vorgesehen, dass mindestens ein Anzeigefeld der Anzeigevorrichtung in Abhängigkeit von dem sich ändernden Betriebszustand des Behandlungsgeräts seine Farbe ändert.

In einer weiteren vorteilhaften Ausgestaltung ist es vorgesehen, dass ein Farbwechsel mindestens eines Anzeigefelds der Anzeigevorrichtung durch Ausschalten einer Lichtquelle mit dem einer Farbe entsprechenden Emissionsspektrums, und zeitnahes Einschalten einer weiteren Lichtquelle mit einem einer anderen Farbe entsprechenden Emissionsspektrum realisiert ist.

In einer weiteren vorteilhaften Ausgestaltung ist es vorgesehen, dass eine Lichtquelle, insbesondere eine farbneutrale Lichtquelle, mindestens ein Anzeigefeld mit Licht beaufschlagt, wobei das Anzeigefeld farbig und insbesondere durchscheinend und die Lichtquelle hinter dem Anzeigefeld angeordnet ist.

In einer weiteren vorteilhaften Ausgestaltung ist es vorgesehen, dass eine Mehrzahl von Lichtquellen für die Bereitstellung von Anzeigen vorgesehen sind, die wenigstens teilweise unterschiedliche Farben aufweisen, und von denen insbesondere mindestens zwei das gleiche Anzeigefeld beaufschlagen.

In einer weiteren vorteilhaften Ausgestaltung ist es vorgesehen, dass die Lichtquelle von einer, das von der Lichtquelle emittierte Licht streuenden, lichtdurchlässigen Abdeckung abgedeckt ist.

In einer weiteren vorteilhaften Ausgestaltung ist es vorgesehen, dass mindestens ein Anzeigefeld der Anzeigevorrichtung farbig gehalten ist und einen erheblichen Teil einer von der Seite oder von vorne sichtbaren Fläche des Behandlungsgeräts, insbesondere mindestens zwei Prozent, bevorzugt mindestens drei Prozent und besonders bevorzugt etwa fünf Prozent dieser Fläche, einnimmt.

In einer weiteren vorteilhaften Ausgestaltung ist es vorgesehen, dass die Anzeigevorrichtung an der Vorderseite des Geräts angeordnet ist und/oder dass die Anzeigevorrichtung oberhalb des Geräts und/oder seitlich am Gerät und/oder an der Unterseite angeordnet ist.

In einer weiteren vorteilhaften Ausgestaltung ist es vorgesehen, dass die Farbsignale für die Dauer des jeweiligen Betriebszustandes konstant und/oder in Intervallen sichtbar sind.

In einer weiteren vorteilhaften Ausgestaltung ist es vorgesehen, dass mindestens ein Anzeigefeld farbig beschichtet ist und mindestens zwei unterschiedlich farbig beschichtete Anzeigefelder je nach Betriebszustand des Behandlungsgeräts wechselweise sichtbar sind.

merisationsgerät, insbesondere ein mit Licht und/oder Wärme arbeitendes Polymerisationsgerät, ist.

Weitere Einzelheiten, Vorteile und Merkmale ergeben sich aus der nachfolgenden Beschreibung mehrerer Ausführungsbeispiele der Erfindung anhand der Zeichnungen. Es zeigen:
- Fig. 1: eine perspektivische Ansicht einer ersten Ausführungs- form eines Brennofens als erfindungsgemäßes Behandlungs- gerät;
- Fig. 2: eine Vorderansicht des Brennofens gemäß Fig. 1;
- Fig. 3: eine Seitenansicht eines Teils des Brennofens gemäß Fig. 1;
- Fig. 4: eine vergrößerte und teilweise aufgebrochene Darstellung der Ausführungsform zur Darstellung eines Teils des Brennofens gemäß Fig. 1 bis 3; und
- Fig. 5: eine modifizierte Ausführungsform in einer Darstellung gemäß Fig. 4.

Fig. 1 zeigt ein Dentalmaterial-Behandlungsgerät 10 in der Ausprägung als Brennofen. Das Dentalmaterial-Behandlungsgerät 10 weist eine Anzeigevorrichtung 12 auf, die sich in dem dargestellten Ausführungsbeispiel im vorderen Bereich erstreckt, und zwar so, dass sie auch seitlich gut sichtbar ist.

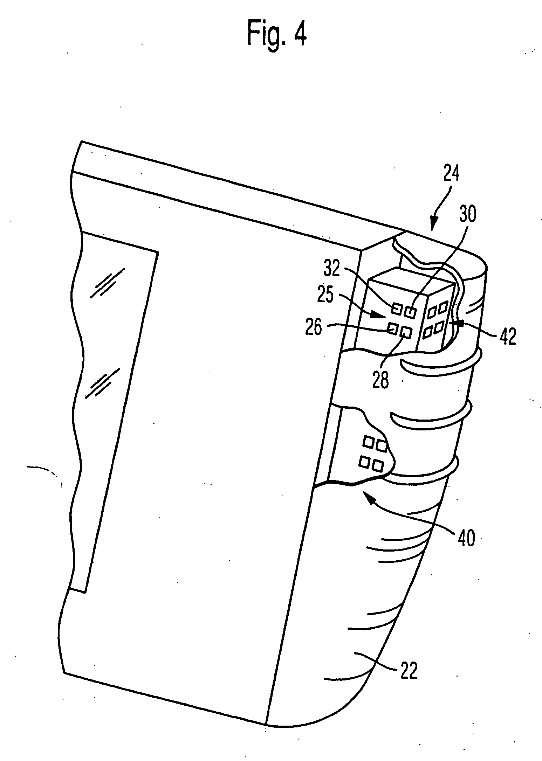

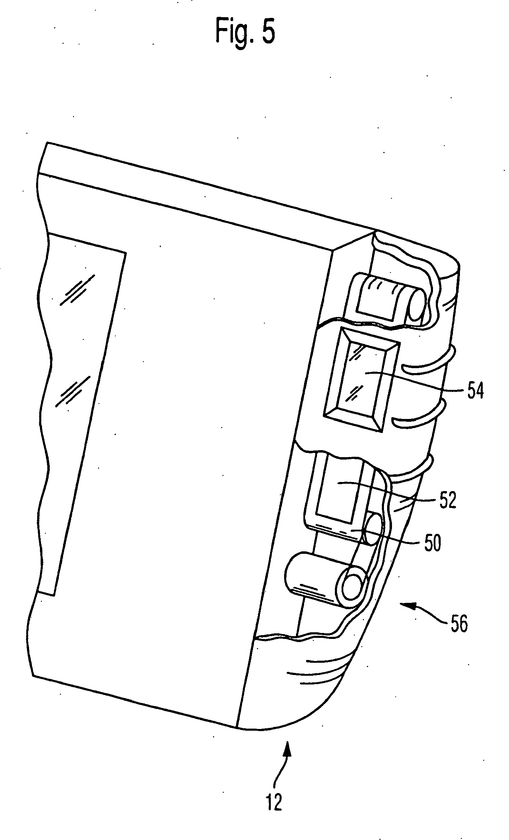

Die Anzeigevorrichtung weist zwei Anzeigefelder 14 und 16 auf, die in dem dargestellten Ausführungsbeispiel in gleicher Weise mit Leuchtdioden bestückt sind, wie es aus Fig. 4 oder alternativ aus Fig. 5 näher ersichtlich ist. Die Anzeigefelder erstrecken sich nach der Art von Ohren seitlich in der Verlängerung eines Bedienfeldes oder eines Bedienpultes 18, das für die Kommunikation zwischen Bediener und dem Brennofen verantwortlich ist. Über das Bedienfeld 18 lässt sich der Ofen über eine Touchscreen 20 steuern und über das dortige Display der Touchscreen werden auch Informationen wie Brennkurve, Temperatur usw. angezeigt.

Demgegenüber erstrecken sich die Anzeigefelder 12 und 14 angrenzend, aber nicht einstückig mit dem Bedienfeld 18.

In einer modifizierten Ausgestaltung des erfindungsgemäßen Behandlungsgeräts, die hier nicht dargestellt ist, ist es vorgesehen, die Anzeigefelder 14 und 16 als Teil der Anzeigevorrichtung 12 in das Bedienfeld 18 zu integrieren und beispielsweise unmittelbar an das Display 20 anschließen zu lassen.

Die Anzeigefelder 14 und 16, deren Anordnung und Ausgestaltung auch aus den Figuren 2 und 3 recht gut ersichtlich ist, bestehen aus einem durchscheinenden Material, beispielsweise aus Kunststoff. Das Material ist neutral getönt.

Besonders günstig ist es, dass die Anzeigefelder 14 und 16 haubenartig ausgebildet sind und Lichtquellen, die die eigentlichen Farbsignale bereitstellen, so umhüllen, dass diese nicht sichtbar sind, wenn die Lichtquelle nicht eingeschaltet ist. Erfindungsgemäß besonders günstig ist es, dass hierdurch unabhängig von den Umgebungslichtverhältnissen eine eindeutige Anzeige mit guter Erkennbarkeit gewährleistet ist. Jedes Anzeigefeld weist eine beträchtliche aufscheinende Fläche auf, wobei die aus Fig. 3 ersichtliche Stärke der Anzeigefelder 14 und 16 so gewählt ist, dass hier keine zu kleine Fläche vorliegt. In der Vorderansicht gemäß Fig. 2 beträgt die Fläche beispielsweise 25 cm², und in der Seitenansicht gemäß Fig. 3 15 cm². Bei entsprechen starken Lichtquellen reicht diese Signalisierung von Farben, die vollflächig über die Anzeigefelder 14 und 16 vorgesehen ist, auch aus, über eine recht weite Distanz optisch auffällig den Betriebszustand des Behandlungsgeräts 10 darzustellen.

In Fig. 1 ist eine gegenüber Fig. 2 etwas vergrößerte Ausgestaltung der Anzeigefelder 14 und 16 vorgesehen. Bei dieser Ausgestaltung sind die Anzeigefelder 14 und 16 stärker teilförmig geneigt, so dass sie oben breiter als unten sind. Bevorzugt sind die jeweils dort vorgesehenen Hauben 22 auch außen abgerundet, wie es sowohl aus Fig. 1 als auch aus Fig. 2 ersichtlich ist, so dass trotz der vorstehenden Bereiche keine Verletzungsgefahr besteht.

Erfindungsgemäß ist das Material jeder Haube 22 ein transparenter Kunststoff, der beispielsweise eingelagerte Schwarzpartikel aufweist. Hierdurch wird eine Diffussionswirkung erzeugt, ohne dass die Intensität der Lichtstrahlung gemindert würde, denn die von den Lichtquellen 24, vgl. Fig. 4, abgegebene Lichtstrahlung wird an den Schwarzpartikeln in an sich bekannterweise gebeugt, so dass eine Streuung des Lichts entsteht.

Erfindungsgemäß ist es vorgesehen, dass die dem Benutzer sich darbietende Farbe sich in Abhängigkeit vom Betriebszustand des Behandlungsgeräts 10 ändert. Beispielsweise ist bekannt, dass der Aufheizzyklus bis zu einem bestimmten Temperaturpunkt des Brennofens rot/gelb dargestellt wird. Die Realisierung der rot/gelb-Anzeige lässt sich durch entsprechende Leuchtdioden oder LEDs realisieren. Im Beispielsfall sind, wie es aus Fig. 4 ersichtlich ist, die Leuchtdioden je in Feldern zusammengefasst, wobei hier beispielshaft ein Leuchtfeld 25 beschrieben ist. Das Leuchtfeld 25 besteht aus einer grünen (oder blauen) Leuchtdiode 26, einer gelben Leuchtdiode 28, einer roten Leuchtdiode 30 und einer weißen Leuchtdiode 32. Wenn nun rot/gelb dargestellt werden soll, werden die rote Leuchtdiode 30 und die gelbe Leuchtdiode 28 eingeschaltet. Bei gleichzeitigem Einschalten dieser Leuchtdioden erscheint das opake Anzeigefeld 16 orange, während es auch möglich ist, die Leuchtdioden alternativ einzuschalten, so dass sich ein rot/gelb-Blinkeffekt ergibt.

Wenn die Betriebstemperatur erreicht ist, bei der der Ofen beschickbar ist, wird beispielsweise lediglich die grüne Leuchtdiode 26 eingeschaltet. Während des Brennzyklusses kann beispielsweise abwechselnd die rote und die grüne Leuchtdiode 26 und 30 eingeschaltet werden; während der Abkühlphase beispielsweise die rote und weiße Leuchtdiode, und bei Entnahmenbereitschaft des fertigen Dentalprodukts die grüne blinkend.

Es versteht sich, dass diese hier ausgeführten Farbsignale lediglich beispielhaft zu verstehen sind und eine beliebige Zuordnung von Farben zu Betriebszuständen möglich ist, ohne den Bereich der Erfindung zu verlassen.

Während es erfindungsgemäß bevorzugt ist, den Wechsel von Betriebszuständen abrupt darzustellen, also beispielsweise abrupt vom gelb/roten Zustand zu dem roten Zustand überzugehen, ist es in einer modifizierten Ausgestaltung vorgesehen, den Übergang visuell darzustellen und hierzu beispielsweise das Tastverhältnis zwischen roter und gelber Leuchtdiode 30 und 28 je bei Annäherung an den "roten" Betriebszustand so anzupassen, dass mehr Rotanteile dargestellt werden.

In dem dargestellten Ausführungsbeispiel sind neben dem Leuchtfeld 25 auch eine Vielzahl weiterer Leuchtfelder vorgesehen, von denen zwei Leuchtfelder 40 und 42 aus Fig. 4 ersichtlich sind. Die Leuchtfelder 25, 40 und 42 erstrecken sich in geeigneter Weise je unterhalb der Haube 22, so dass eine vollflächige Anzeige erzeugt wird.

Während in den Figuren 1 bis 3 die Anzeigevorrichtung unter Verwendung von selbstleuchtenden Sichtquellen, nämlich von Leuchtdioden dargestellt ist, versteht es sich, dass anstelle dessen auch beliebiege andere selbstleuchtende Lichtquellen, wie farbige Laserdioden, Glühbirnen, einschließlich farbigen Halogenlampen, oder aber farbige LCD-Anzeigen realisierbar sind, ohne den Bereich der Erfindung zu verlassen. Alternativ können auch weiße Lichtquellen mit entsprechenden Farbfiltern kombiniert werden.

Aus Fig. 5 ist hingegen eine modifizierte Ausgestaltung ersichtlich, die ohne Leuchtmittel auskommt. Hier ist ein umlaufendes Band 50 vorgesehen, das verschiedene Farbfelder 52 trägt, die unterhalb eines durchsichtigen Fensters 54 sichtbar sind. Über einen Antrieb 56 lässt sich die Stellung des jeweiligen Feldes 52 in Deckung mit dem Fenster 54 bringen, so dass das betreffende Feld als Farbsignal sichtbar ist. Mit dieser Lösung, die bei guten Sichtverhältnissen verwendet werden kann, lässt sich ebenfalls die Farbsignalisierung, wie sie erfindungsgemäß vorgesehen ist, gewährleisten.

## Patentansprüche

1. Dentalmaterial-Behandlungsgerät, das ein material-Behandlungsgerät, Brennofen ist, mit einer Anzeigevorrichtung, mit welcher mindestens ein Betriebszustand des Brennofens anzeigbar ist und deren Anzeige von dem Betriebszustand des Brennofens abhängt, **dadurch gekennzeichnet, dass** die Anzeigevorrichtung (12) unterschiedliche Betriebszustände des Brennofens (10) ausschließlich mit Hilfe von Farbsignalen anzeigt, wobei jeder Farbe ein Betriebszustand des Brennofens zugeordnet ist, und dass die Anzeigevorrichtung zwei Anzeigefelder (14, 16) aufweist, die in einer Größe von mehreren Quadratzentimetern leuchten, um die Erkennbarkeit aus der Ferne zu verbessern und die in Abhängigkeit von einem sich änderenden Betriebszustand des Brennofens ihre Farbe ändern, und dass die zwei Anzeigefelder sich nach der Art von Ohren seitlich in der Verlängerung eines Bedienfeldes (18) des Brennofens erstrecken.

2. Behandlungsgerät nach Anspruch 1, **dadurch gekennzeichnet, dass** eine Mehrzahl von Lichtdioden für die Bereitstellung von Anzeigen vorgesehen sind, die wenigstens teilweise unterschiedliche Farben aufweisen, und von denen insbesondere mindestens zwei das gleiche Anzeigefeld (14,16) beaufschlagen.

3. Behandlungsgerät nach einem der vorhergehenden Ansprüche, **dadurch gekennzeichnet, dass** die Lichtquelle von einer, das von der Lichtquelle emittierte Licht streuenden, lichtdurchlässigen Abdeckung abgedeckt ist.

4. Behandlungsgerät nach einem der vorhergehenden Ansprüche, **dadurch gekennzeichnet, dass** die Farbsignale für die Dauer des jeweiligen Betriebszustandes konstant und/oder in Intervallen sichtbar sind.

5. Behandlungsgerät nach einem der vorhergehenden Ansprüche, **dadurch gekennzeichnet, dass** die Farbsignale auf wenigstens einer farbigen Anzeigefläche aufscheinen, die sich insbesondere auf einem Trägerelement befindet, das in Abhängigkeit von dem Betriebszustand steuerbar bewegbar ist.

## Claims

1. A treatment device for dental material, said treatment device being a burning kiln with a display device, with the aid of which at least one operating state of the burning kiln may be displayed and the display thereof depends on or is a function of the operating state of the burning kiln, **characterized in that** the display device (12) displays different operating states of the burning kiln (10) exclusively with the assistance of colour signals, wherein each colour is associated with an operating state of the burning kiln, and further **characterized in that** the display device comprises two display panels (14, 16) that are illuminated to a magnitude of several square centimeters in order to improve recognizability from a distance and which change their colour depending on a changing operating state of the burning kiln, and **characterized in that** the two display panels like ears laterally extend in extension of a control panel (18) of the burning kiln.

2. The treatment device according to claim 1, **characterized in that** a plurality of light diodes are provided for supplying the displays, which have at least partially different colours, and of which at least two irradiate on the same display panel (14, 16).

3. The treatment device according to one of the preceding claims, **characterized in that** the light source is covered by a translucent cover that scatters the light emitted by the light source.

4. The treatment device according to one of the preceding claims, **characterized in that** the colour signals are constantly visible for the duration of the respective operating state and/or are visible in intervals.

5. The treatment device according to one of the preceding claims, **characterized in that** the colour signals appear on at least one coloured display surface, which is in particular disposed on a support element, wherein said support element is controllably moveable depending on the operating state.

## Revendications

1. Appareil de traitement de matériaux dentaires qui est un four avec un dispositif d'affichage avec lequel au moins un état de fonctionnement du four peut être affiché et son affichage dépend de l'état de fonctionnement du four, **caractérisé en ce que** le dispositif d'affichage (12) affiche différents états de fonctionnement du four (10) uniquement à l'aide de signaux de couleur où un état de fonctionnement du four est attribué à chaque couleur, et que le dispositif d'affichage présente deux champs d'affichage (14, 16), qui éclairent une surface de plusieurs centimètres carrés, afin d'améliorer la visibilité à distance et qui en réponse à une évolution de l'état de fonctionnement du four, changent de couleur et que les deux panneaux d'affichage s'étendent sur le côté comme des oreilles dans le prolongement d'un panneau de commande (18) du four.

2. Appareil de traitement selon la revendication 1, **caractérisé en ce qu'**une pluralité de diodes électroluminescentes pour la fourniture d'affichages est prévue qui présentent au moins partiellement des couleurs différentes, et parmi lesquelles, en particulier, au moins deux agissent sur le même champ d'affichage (14,16).

3. Appareil de traitement selon l'une des revendications précédentes **caractérisé en ce que** la source de lumière est couverte par une seule couverture translucide, diffusant la lumière émise à partir de la source lumineuse.

4. Appareil de traitement selon l'une des revendications précédentes **caractérisé en ce que** les signaux de couleur sont visibles de façon constante et / ou par intermittence pour la durée de chaque état de fonctionnement.

5. Appareil de traitement selon l'une des revendications précédentes **caractérisé en ce que** les signaux de couleur apparaissent sur au moins une zone d'affichage de couleur qui se trouve en particulier sur un élément de support qui en fonction de l'état de fonctionnement est déplaçable de manière contrôlable.
